## Europäisches Patentamt
## European Patent Office
## Office européen des brevets

(11) Veröffentlichungsnummer: **0 387 487**

**A2**

(12) **EUROPÄISCHE PATENTANMELDUNG**

(21) Anmeldenummer: **90100551.2**

(22) Anmeldetag: **12.01.90**

(51) Int. Cl.5: **B65G 37/02, B23Q 7/14**

(30) Priorität: **11.03.89 DE 8903031 U**

(43) Veröffentlichungstag der Anmeldung:
**19.09.90 Patentblatt 90/38**

(84) Benannte Vertragsstaaten:
**AT BE CH DE DK ES FR GB IT LI NL SE**

(71) Anmelder: **PROTECH AUTOMATION GmbH**
**Niederkasseler Strasse 14**
**D-5000 Köln 90(DE)**

(72) Erfinder: **Blöcker, Detlef, Dipl.-Ing.**
**Alter Heeresweg 32**
**D-5330 Königswinter 21(DE)**

(74) Vertreter: **Selting, Günther, Dipl.-Ing. et al**
**Patentanwälte von Kreisler, Selting, Werner**
**Deichmannhaus am Hauptbahnhof**
**D-5000 Köln 1(DE)**

(54) **Montagelinie.**

(57) Die Montagelinie enthält eine Montagemaschine (10) mit mehreren Förderern (12,14) in der Arbeitsebene und weiteren Förderern (12a,14a) in der Rückführebene. Die Werkstücke werden auf den Förderern auf Paletten transportiert. Um die Paletten mit oder ohne Werkstücke von einer Ebene in die andere zu bewegen, ist ein Lift (18) vorgesehen, der einen vertikalen verfahrbaren Schlitten (20) in Balkonbauweise aufweist. Auf dem Schlitten (20) befindet sich ein Förderer (26). Die Montagemaschine weist angrenzend an den Förderer (26) in beiden Ebenen Übergabestationen (17,17a) auf, deren Förderer zu dem Förderer (26) des Schlittens ausgerichtet werden können. Der Lift (18) ermöglicht die Übertragung von Werkstückträgern zwischen unterschiedlichen Förderebenen.

FIG. 2

EP 0 387 487 A2

## Montagelinie

Die Erfindung betrifft eine Montagelinie der im Oberbegriff des Anspruchs 1 angegebenen Art.

DE 37 00 192 A1 beschreibt eine Montagelinie aus mehreren, gleichartig aufgebauten Montagemaschinen, die jeweils mehrere Förderer und Übergabestationen in einer Arbeitsebene und andere Förderer und Übergabestationen in einer darunter angeordneten Rückführebene aufweisen. Die Montagemaschine bildet die Grundeinheit der Montagelinie und mehrere gleichartig aufgebaute Montagemaschinen können in vielfachen Konfigurationen miteinander verbunden werden, um die Montagelinie zu bilden, an deren Stationen unterschiedliche Montagearbeiten an Werkstücken durchgeführt werden können, die auf den Förderern transportiert werden. An den Montagemaschinen können die die Werkstücke tragenden Paletten an bestimmten Positionen angehalten werden, um an den Werkstücken Montagearbeiten durchzuführen. In der unterhalb der Arbeitsebene angeordneten Rückführebene werden die Paletten, die die Montagelinie zusammen mit den Werkstücken durchlaufen haben, in leerem Zustand zum Anfangspunkt der Montagelinie zurückgeführt. Die Förderer in der Rückführebene sind generell in umgekehrter Richtung angetrieben wie die Förderer der Arbeitsebene. Das Umsetzen der leeren Paletten von der Arbeitsebene in die Rückführebene erfolgt bei der bekannten Montagelinie von Hand.

Der Erfindung liegt die Aufgabe zugrunde, eine Montagelinie der im Oberbegriff des Anspruchs 1 angegebenen Art zu schaffen, bei der das Umsetzen der Werkstückträger von der Arbeitsebene in die Rückführebene automatisch durchführbar ist, wobei die dazu erforderliche Umsetzstation unterschiedliche Variationsmöglichkeiten im Aufbau der Montagelinie zuläßt.

Die Lösung dieser Aufgabe erfolgt erfindungsgemäß mit den im kennzeichnenden Teil des Anspruchs 1 angegebenen Merkmalen.

Bei der erfindungsgemäßen Montagelinie ist eine Umsetzstation in Form eines Lifts vorgesehen, der es ermöglicht, Werkstücke und/oder Werkstückträger von der Arbeitsebene in die Rückführebene oder auch von der Rückführebene in die Arbeitsebene umzusetzen. Dieser Lift besteht aus einem Gestell mit einem in Balkonbauweise ausgeführten, vertikal verschiebbaren Schlitten. Der Lift kann an geeigneten Stellen der Montagelinie, vorzugsweise an derem Ende, angeordnet werden. Er übernimmt die Werkstückträger und/oder Werkstücke von einer Montagemaschine auf einen gesonderten Förderer, der zusammen mit dem Schlitten in vertikaler Richtung verfahren wird, und gibt die Last anschließend der Rückführebene an dieselbe Montagemaschine oder eine andere Montagemaschine ab. Die Balkonbauweise des Schlittens ermöglicht den freien Zugang von drei Seiten her, während nur die dem Gestell zugewandte dritte Seite unzugänglich ist. Dies ermöglicht es, den Förderer des Schlittens sowohl als Umkehrförderer als auch als Durchlaufförderer zu betreiben.

Der Umstand, daß an den Anschlußstellen der Montagemaschinen Übergabestationen angeordnet sind, die wahlweise in zwei zueinander rechtwinkligen Richtungen fördern können, ermöglicht eine große Flexibilität der Kombination von Montagemaschine und Lift. Der Lift kann in geradliniger Ausrichtung mit dem Hauptförderer der Montagemaschine angeordnet werden oder auch in geradliniger Ausrichtung mit einem Seitenförderer der Montagemaschine.

Es ist nicht unbedingt erforderlich, daß die Montagemaschinen in der Rückführebene jeweils einen Hauptförderer und zwei dazu rechtwinklig verlaufende Seitenförderer sowie zwei Übergabestationen an den Enden des Hauptförderers aufweisen, obwohl dies die bevorzugte Ausführungsform darstellt. Die Montagemaschinen können in der Rückführebene individuell mit den verschiedenen zweiten Förderern bestückt sein. Unter der dem Lift benachbarten Übergabestation der Arbeitsebene sollte auch in der Rückführebene eine solche Übergabestation vorhanden sein, damit der Anschluß an den Förderer des Lifts in beiden Ebenen jeweils in gleicher Weise durchgeführt wird. Die Übergabestationen ermöglichen eine Änderung der Förderrichtung gegenüber derjenigen des Liftförderers um 90°.

Im folgenden werden unter Bezugnahme auf die Zeichnungen Ausführungsbeispiele der Erfindung näher erläutert.

Es zeigen:

Fig. 1 einen Teil einer Montagelinie mit vertikaler Umsetzung der Werkstücke und/oder Werkstückträger,

Fig. 2 eine perspektivische Ansicht des Lifts in der Montagelinie nach Fig. 1,

Fig. 3 eine Frontansicht des Lifts mit den Übergabestationen der angrenzenden Montagemaschinen,

Fig. 4 eine Seitenansicht des Lifts und

Fig. 5 eine Draufsicht eines Teils einer anderen Montagelinie.

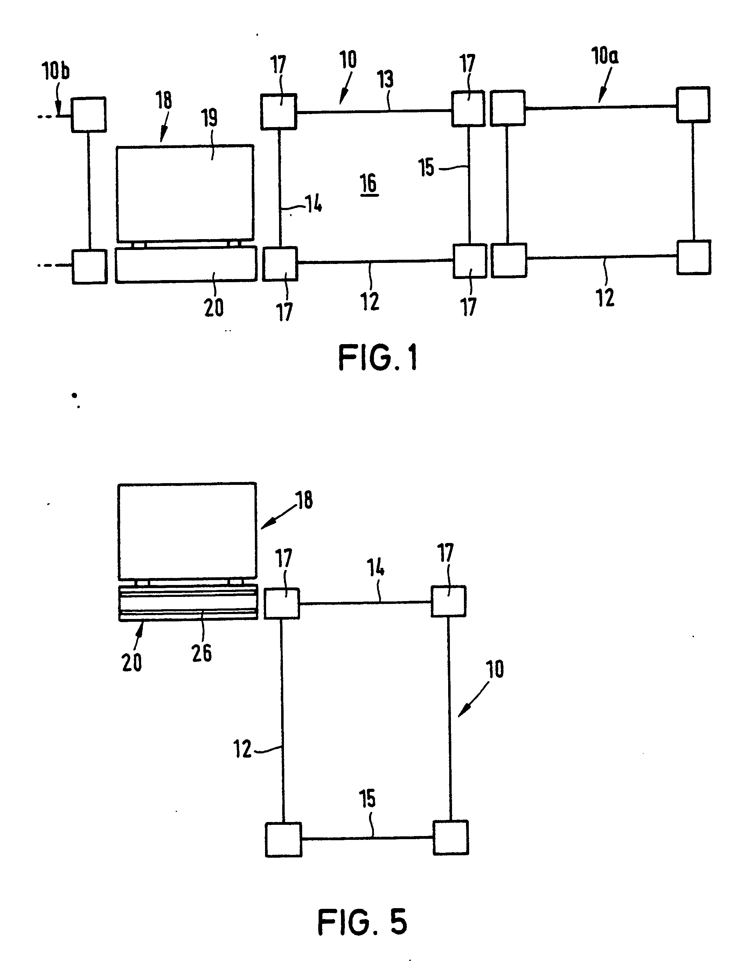

Die in Fig. 1 dargestellte Montagelinie weist mehrere Montagemaschinen 10, 10a und 10b auf, die derart gegeneinandergesetzt sind, daß auf ihren Förderern transportierte Werkstückträger von einer Montagemaschine zur nächsten übertragen werden können. Der grundsätzliche Aufbau der Montagemaschinen wird anhand der Montagemaschine 10 näher erläutert.

Die Montagemaschine 10 weist an einem (nicht dargestellten) Gestell in zwei übereinander angeordneten Ebenen verschiedene Förderer auf. In Fig. 1 ist die Draufsicht dargestellt, in der nur die obere Arbeitsebene sichtbar ist. In dieser Arbeitsebene ist ein Hauptförderer 12 vorgesehen und parallel zu dem Hauptförderer 12 verläuft der Nebenförderer 13. Die Enden dieser beiden Förderer sind durch querlaufende Nebenförderer 14 und 15 miteinander verbunden. Das Rechteck, das von den vier Förderern 12,13,14,15 um schlossen wird, kann durch eine Tisch- oder Ablagefläche 16 ausgefüllt sein. An den Enden der Förderer befinden sich Übergabestationen 17, die es beispielsweise ermöglichen, einen Werkstückträger, der auf einem der Förderer ankommt, auf einen der rechtwinklig abzweigenden Förderer zu übergeben. Außerdem ermöglichen die Übergabestationen 17 die Abgabe bzw. Übernahme von Werkstückträgern von einer Montagemaschine zu einer benachbarten Montagemaschine.

Bei dem Ausführungsbeispiel der Fig. 1 sind die Hauptförderer 12 der beiden Montagemaschinen 10 und 10a zueinander ausgerichtet, so daß bei entsprechender Einstellung der an diese Hauptförderer 12 angrenzenden Übergabestationen 17 ein gerader Förderweg entlang der beiden Hauptförderer 12 realisiert werden kann. Es ist auch möglich, Werkstückträger über einen Seitenförderer auf den Nebenförderer 13 zu transportieren, wo diese Werkstückträger angehalten werden können, damit an den Werkstücken Montagearbeiten durchgeführt werden können. Nach Beendigung der Montagearbeiten werden die Werkstückträger über den Seitenförderer 14 zu der Übergabestation am anderen Ende des Hauptförderers 12 gefördert. Auf diese Weise kann der Hauptförderer 12 durch die Förderer 15,13 und 14 umgangen werden.

Angrenzend an die eine Übergabestation der Montagemaschine 10 ist der Lift 18 angeordnet. Dieser Lift besteht aus einem Gestell 19, das einen vertikal bewegbaren Schlitten 20 aufweist, der auf die Höhe der Arbeitsebene und auf die Höhe der Rückführebene bewegt werden kann.

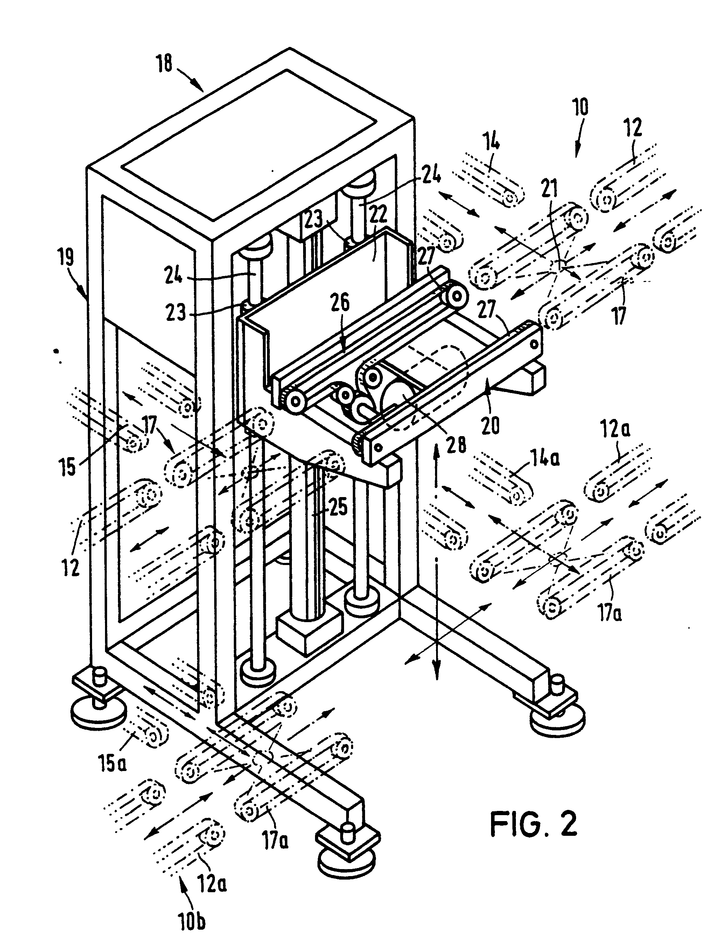

Wie aus Fig. 2 hervorgeht, sind bei dem beschriebenen Ausführungsbeispiel sämtliche Förderer als Duplex-Band förderer ausgebildet. Dies bedeutet, daß jeder Förderer zwei parallele Förderbänder aufweist, die mit gegenseitigem Abstand verlaufen und synchron angetrieben sind. Gegenstände oder Werkstückträger können auf beide Förderbänder zugleich aufgelegt werden, wobei die Mittelbereiche der Gegenstände oder Werkstückträger über dem Zwischenraum der Förderer angeordnet und nicht unterstützt sind.

Die Übergabestation 17 besteht aus einem kurzen Duplex-Förderer, der um eine vertikale Achse 21 geschwenkt werden kann, so daß seine Förderrichtung entweder mit derjenigen des Hauptförderers 12 oder mit derjenigen des angrenzenden Seitenförderers 14 ausgerichtet ist. Der konstruktive Aufbau einer solchen Übergabestation 17 ist Gegenstand der älteren Patentanmeldung P 38 30 194.6. Durch (nicht dargestellte) Sensoren wird ermittelt, wann ein Werkstückträger die Übergabestation 17 erreicht hat. Dann kann die Übergabestation um die vertikale Achse 21 herum rechtwinklig geschwenkt werden, falls dies für den vorgesehenen Weg dieses Werkstückträgers erforderlich ist. Der Förderer der Übergabestation 17 ist synchron mit einem der angrenzenden Förderer 12 oder 14 angetrieben.

In Fig. 2 sind außer den Förderern 12 und 14 und der Übergabestation 17, die in der (oberen) Arbeitsebene angeordnet sind, auch die Förderer der unteren Arbeitsebene sichtbar. Diese Förderer sind lotrecht unter den zugehörigen Förderern der Arbeitsebene angeordnet und mit den gleichen Bezugszeichen unter Zusatz des Buchstabens "a" versehen wie diese. Bei einer bevorzugten Ausführungsform sind in der Rückführebene die gleichen Förderer angeordnet wie in der Arbeitsebene, jedoch ohne einen Nebenförderer. Außerdem sind in gleicher Weise wie in der Arbeitsebene insgesamt vier Übergabestationen 17a vorhanden.

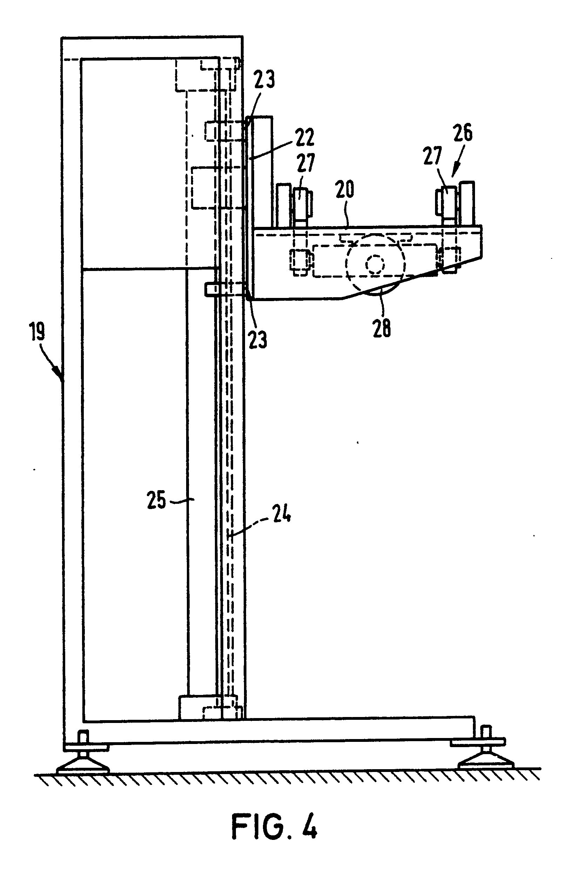

Die Figuren 2-4 zeigen den konstruktiven Aufbau des Lifts 18. Der Schlitten 20 ist in Balkonbauweise an dem rechteckigen Gestell 19 heb- und senkbar angebracht. Dies bedeutet, daß er von einer Seite des Gestells frei auskragend nach außen ragt. Der Schlitten 20 weist eine dem Gestell 19 zugewandte vertikale Seitenwand 22 auf, von der nach außen, also zum Gestell 19 hin, Führungsbuchsen 23 abstehen. Die Führungsbuchsen 23 sind in vertikalen Säulen 24 des Gestells 19 geführt. Zum Antrieb der Vertikalbewegung des Schlittens 20 dient eine hydraulische Zylindereinheit 25, die sich parallel zwischen den Säulen 24 erstreckt.

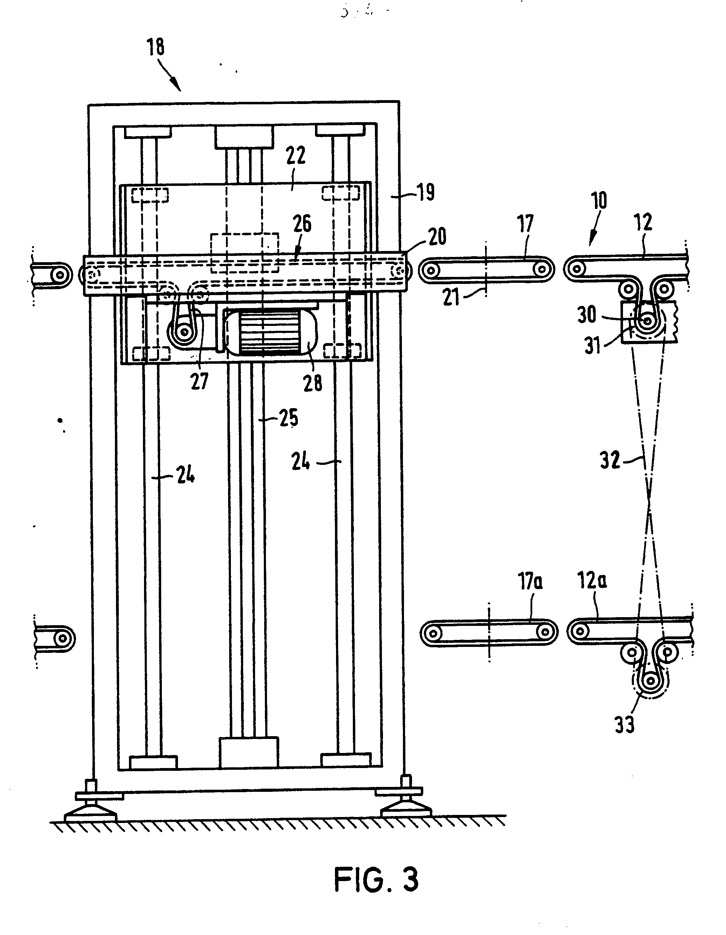

Auf dem Schlitten 20 ist ein Förderer 26 montiert, der als Duplex-Förderer ausgebildet ist und zwei parallele Förderbänder 27 aufweist, welche gemeinsam durch einen Elektromotor 28 angetrieben sind. Die Förderbänder 27 des Förderers 26 sind zu denjenigen des Hauptförderers 12 ausgerichtet und sie liegen auch auf gleicher Höhe, wenn sich der Schlitten 20 im angehobenen Zustand befindet (s. Fig. 3). Im abgesenkten Zustand befindet sich der Förderer 26 auf Höhe des Förderers 12a und in Längsausrichtung mit diesem.

Wenn die Übergabestation 17 sich in der in den Figuren 2 und 3 dargestellten Position in Ausrichtung mit dem Hauptförderer 12 befindet, können Werkstückträger vom Hauptförderer 12 über den angetriebenen Förderer der Übergabestation 17 auf den Förderer 26 übergeben werden. Durch Absenken des Schlittens 20 wird der Werkstückträger in die untere Rückführebene übertragen und dort kann der Werkstückträger über die Übergabestation 17a auf den Hauptförderer 12a übergeben werden.

Es ist auch möglich, den Förderer 26 lediglich als Zwischenförderer zu verwenden, um die Werkstückträger geradlinig von dem Hauptförderer 10 auf den Nebenförderer 10b (Fig. 1) zu überführen. Ferner können Werkstückträger von einer Seite des Lifts 18 auf die andere Seite übertragen werden, wobei die Ebene des Transports gewechselt wird. Es ist also nicht unbedingt erforderlich, die Rückführung der Werkstückträger auf demselben Weg unterhalb der Hin-Transportstrecke vorzunehmen.

Der Schlitten 20 ist - von oben betrachtet - von drei Seiten her frei zugänglich. Es ist also ein manueller Zugriff zu den auf dem Schlitten liegenden Werkstückträgern ohne weiteres möglich.

Am Schlitten 20 sind (nicht dargestellte) Sensoren vorgesehen, um das Eintreffen eines Werkstückträgers zu erkennen und daraufhin den Motor 28 einzuschalten, bis der Werkstückträger die Mittelposition auf dem Förderer 26 erreicht hat. Das Wiedereinschalten des Förderers erfolgt automatisch nach Beendigung des Anhebens oder Absenkens des Schlittens. Dabei kann die Richtung, in der der Förderer angetrieben wird, durch eine Programmsteuerung oder durch Abfrage einer Kodierung an den Werkstückträgern vorgegeben sein.

Fig. 5 zeigt schematisch ein Ausführungsbeispiel, bei dem der Hauptförderer 12 rechtwinklig zur Richtung des Förderers 26 auf dem Schlitten 20 verläuft. In diesem Fall werden Werkstückträger, die auf dem Hauptförderer 12 angefördert werden, zunächst auf der Übergabestation 17 um 90° gedreht und dann in Ausrichtung mit dem Seitenförderer 14 dem Schlitten 20 zugeführt. Die Verwen dung des Lifts 18 in Verbindung mit einer unmittelbar angrenzenden Übergabestation 17, die eine Richtungsänderung der Werkstückträger zuläßt, bringt somit den Vorteil einer großen Vielseitigkeit der zu realisierenden Varianten der Montagelinie.

Fig. 3 zeigt den Antrieb der Riemen des Hauptförderers 12 in der Arbeitsebene und des darunter angeordneten Hauptförderers 12a in der Rückführebene. Die Riemen des Hauptförderers 12 laufen um von einem Motor angetriebene Riemenräder 30. Auf derselben Welle wie diese Riemenräder sitzt ein weiteres Riemenrad 31, um das ein Zahnriemen 32 läuft, welcher über ein Riemenrad 33 den Hauptförderer 12a der Rückführebene treibt. Der Zahnriemen 32 ist um 180° verdreht, um zu erreichen, daß der Hauptförderer 12a in Gegenrichtung zum Hauptförderer 12 angetrieben wird. Auf diese Weise werden zwei einander zugeordnete Förderer 12 und 12a von einem einzigen Motor in entgegengesetzten Richtungen angetrieben. In gleicher Weise sind die Antriebe der einander zugeordneten Seitenförderer 14 und 14a sowie 15 und 15a miteinander gekoppelt.

**Ansprüche**

1. Montagelinie mit mehreren Montagemaschinen (10), die jeweils in einer Arbeitsebene eine Übergabestation (17) und zwei aus unterschiedlichen Richtungen an der Übergabestation (17) endende erste Förderer (12,14) aufweisen und die jeweils in einer Rückführebene mindestens einen zweiten Förderer (12a) und eine Übergabestation (17a) aufweisen, wobei die Übergabestationen (17,17a) derart steuerbar sind, daß sie entweder die angrenzenden Förderer miteinander verbinden oder einen dieser Förderer mit einer Zu- und Abführstelle der Montagemaschine (10) verbinden, **dadurch gekennzeichnet,** daß im Anschluß an zwei übereinander in den unterschiedlichen Ebenen angeordneten Übergabestationen (17,17a) einer Montagemaschine (10) ein Lift (18) angeordnet ist, der auf einem vertikal verfahrbaren Schlitten (20) einen Förderer (26) aufweist, und daß der Schlitten (20) in Balkonbauweise ausgeführt und nur an einer parallel zu seinem Förderer (26) verlaufenden Seite an einem Gestell (19) geführt ist.

2. Montagelinie nach Anspruch 1, dadurch gekennzeichnet, daß die Übergabestation (17,17a) einen Übergabeförderer aufweist, der um eine senkrechte Achse (21) schwenkbar ist.

3. Montagelinie nach Anspruch 1 oder 2, dadurch gekennzeichnet, daß der Schlitten (20) an seiner geführten Seite nach außen abstehende Führungselemente (23) aufweist, welche an vertikalen Säulen (24) des Gestells (19) geführt sind.

4. Montagelinie nach einem der Ansprüche 1-3, dadurch gekennzeichnet, daß der Schlitten (20) entlang seines Verschiebeweges frei auskragend von dem Gestell (19) absteht.

5. Montagelinie nach einem der Ansprüche 1-4, dadurch gekennzeichnet, daß an dem Schlitten (20) ein Motor (28) für den Antrieb des Förderers (26) vorgesehen ist.

6. Montagelinie nach einem der Ansprüche 1-5, dadurch gekennzeichnet, daß übereinander angeordnete Förderer (12,12a) in der Arbeitsebene und in der Rückführebene der Montagemaschine (10) von demselben Motor in entgegengesetzten Richtungen angetrieben sind.

7. Montagelinie nach Anspruch 6, dadurch gekennzeichnet, daß der Antrieb mindestens eines dieser Förderer (12,12a) über einen um 180° verdrehten Zahnriemen (32) erfolgt.

FIG.1

FIG. 5

FIG. 2

FIG. 3

FIG. 4